# EUROPÄISCHE PATENTANMELDUNG

(11) **EP 2 505 059 A1**
(43) Veröffentlichungstag der Anmeldung: **03.10.2012**
(21) Anmeldenummer: 12159024.4
(22) Anmeldetag: 12.03.2012
(51) Int. Cl.: A01N 25/10, A01N 59/16, A01N 41/06, A01P 1/00

(54) **Antimikrobielle Ausrüstung von Kunststoffen und textilen Oberflächen**

(30) Priorität: 31.03.2011 AT 4562011
(71) Anmelder: Sembella GmbH, 4850 Timelkam (AT)
(72) Erfinder: Rametsteiner, Karl, 4040 Linz (AT)
(74) Vertreter: Hübscher, Helmut

(57) **Zusammenfassung**

Es wird eine antimikrobielle Ausrüstung von Kunststoffen und textilen Oberflächen auf der Basis von Sulfonamid-Silbersalzen mit einer Aminogruppe in der 4'-Stellung beschrieben. Um eine vorteilhafte antimikrobielle Wirkung zu erzielen, wird vorgeschlagen, dass die Aminogruppe mit Hilfe eines mit der Aminogruppe durch Addition reagierenden, eine Salzbildung durch eine Carboxygruppe ausschließenden Substituenten in eine Polymerstruktur kovalent eingebunden ist.

## Beschreibung

Die Erfindung bezieht sich auf eine antimikrobielle Ausrüstung von Kunststoffen und textilen Oberflächen auf der Basis von Sulfonamid-Silbersalzen mit einer Aminogruppe in der 4'-Stellung.

Die antimikrobielle Wirkung von Substraten, die Silber enthalten, ist bekannt. So werden beispielsweise Gebrauchsgegenstände mit Hilfe von Silberzeolith, Silberglas und anderen komplexen silberhaltigen Silikaten und Aluminaten gegen einen mikrobiellen Befall geschützt, weil die freigesetzten Silberionen in mehrfacher Form in den Stoffwechsel von Mikroorganismen eingreifen, wobei unter anderem lebenswichtige Enzyme blockiert werden, ein Ladungsausgleich an den Zellmembranen stattfindet und Thiol-Endgruppen in Proteinen gebunden werden. Nachteilig ist allerdings die begrenzte Wirksamkeit aufgrund der stetigen Freisetzung von Silberionen.

Zur Desinfektionsausrüstung von Verbandstoffen ist es darüber hinaus bekannt, Silbersulfadiazin, also das Silbersalz des 2-Sulfanilamidopyrimidins, 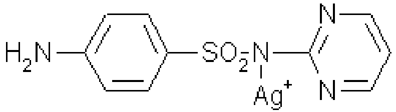 einzusetzen, um die mikrobizide Wirkung der Silberionen mit der antibiotischen Wirkung des Sulfonamids Sulfadiazin zu kombinieren. Für die antimikrobielle Ausrüstung von Gegenständen des täglichen Gebrauchs sind diese Mittel aber wegen der ständigen Gegenwart von Sulfonamiden ungeeignet. Es hat sich nämlich gezeigt, dass mit der Freisetzung der Silberionen aus Sulfonamidsalzen aus dem unlöslichen Salz das gut lösliche Sulfonamid entsteht.

Der Erfindung liegt somit die Aufgabe zugrunde, die gute antimikrobielle Wirkung von Sulfonamit-Silbersalzen für die Ausrüstung von Kunststoffen und textilen Oberflächen zu nützen, ohne das Freisetzen von Sulfonamid befürchten zu müssen.

Ausgehend von einer antimikrobiellen Ausrüstung der eingangs geschilderten Art löst die Erfindung die gestellte Aufgabe dadurch, dass die Aminogruppe mit Hilfe eines mit der Aminogruppe durch Addition reagierenden, eine Salzbildung durch eine Carboxygruppe ausschließenden Substituenten in eine Polymerstruktur kovalent eingebunden ist.

Durch die kovalente Einbindung der Aminogruppe in eine Polymerstruktur wird die Freisetzung von Silberionen und damit das Entstehen von "freiem" Sulfonamid unterbunden, ohne die antimikrobielle Wirkung zu gefährden, weil ja die Wirkung der Silberionen wegen ihrer Einbindung in die Polymerstruktur über die Aminogruppe auf Dauer erhalten bleibt. Es dürfen jedoch keine Substituenten eingesetzt werden, die eine reine Salzbildung durch eine Carboxygruppe im Polymer nach sich ziehen. Solche Substitutenten führen nämlich zu einer Freisetzung des Sulfonamids, was ja unterbunden werden soll.

Als Substituenten eignen sich je nach dem Einsatzgebiet unterschiedliche Verbindungen. So kann beispielsweise die Aminogruppe durch ein polymeres Oxiran 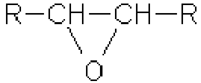 in Form eines Alkanolamins 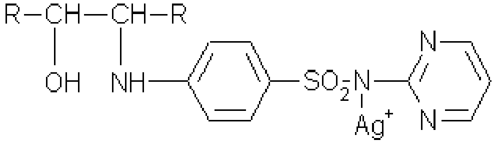 in die Polymerstruktur eingebunden werden. Damit können insbesondere Polyolefine, Polyacrylate, Epoxidharze, Polyester und Polyamide antimikrobiell ausgerüstet werden. Als polymere Oxirane können vorteilhaft Copolymere von Glycidylestern ungesättigter Fettsäuren mit olefinisch ungesättigten CoMonomeren, wie Co-Polyglycidylmethacrylat/Ethylen oder Co-Polyglycidylmethacrylat/Propylen, und Epoxyharze auf der Basis von Glyzidylether eingesetzt werden.

Für die antimikrobielle Ausrüstung von Polyurethanen eignen sich insbesondere polymere Isocyanate

R—NCO als Substituent, mit deren Hilfe die Aminogruppe in Form von Ureiden

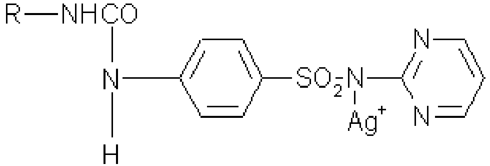

in die Polymerstruktur eingebunden wird. als Substituent eigenen sich Isocyanate, wie sie in der Plyurethanchemie handelsüblich sind, z. B. Toluoldiisocyanat, Diphenylmethandiisocyanat u. dgl.

Reagiert die Aminogruppe des Sulfonamid-Silbersalzes mit einem Bis-Acylcaprolactam 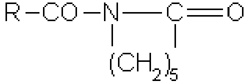 als Substituent zu einem Amid, so ergibt sich eine vorteilhafte Einbindung der Aminogruppe 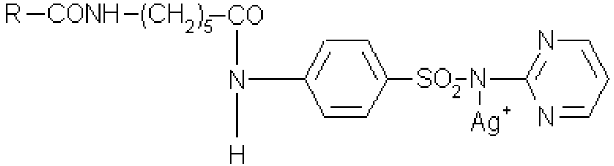 in die Polymerstruktur eines Polyesters oder eines Polyamids. Substituenten dieser Art sind bevorzugt Kettenstrecker, wie Carbonyl-bis-caprolactam oder 1,3-Phenylen-bis-(2-oxazolin-2).

Die Erfindung ist selbstverständlich nicht auf Sulfadiazin als Sulfonamidgrundkörper beschränkt. Sehr gute Ergebnisse können auch mit anderen Sulfonamid-Silbersalzen wie Sulfapyridin, Sulfamethoxazol, Sulfathiazol, Sulfaisoxazol, Sulfathiadiazolen, Sulfacetamid, Sulfamethylpyrimidin, erzielt werden. Die Silbersalze der Sulfonamide werden durch Fällen einer wässrigen Lösung von Sulfonamidnatrium mit der stöchiometrischen Menge eines löslichen Silbersalzes, bevorzugt Silbernitrat und Silbersulfat, gebildet. Nach einer Filtration wird reichlich mit Wasser gewaschen, getrocknet und das Silbersalz bis zu einer Korngröße von etwa 10 µm gemahlen. Damit werden eine gute Dispergierbarkeit und Lösbarkeit und damit eine gute Reaktionsfreudigkeit in der Polymerschmelze gewährleistet, was zu einer verbesserten antimikrobiellen Wirksamkeit führt, sodass die eingesetzte Menge an teuren Silberverbindungen klein gehalten werden kann. Üblicherweise kann mit Silbersalzmengen von 0,05 bis 0,1 Gew.% das Auslangen gefunden werden. Die zur kovalenten Bindung erforderlichen Zusätze der reaktiven Komponenten in der Polymerschmelze werden in einer zumindest stöchiometrischen Menge erforderlich. Bevorzugt werden die Zusätze aber in einem um mindestens 10 % über der stöchiometrischen Menge liegenden Anteil zugegeben.

In den folgenden Ausführungsbeispielen werden die jeweiligen Anteile der Sulfonamid-Silbersalze und der für die antimikrobiell auszurüstenden Polymere eingesetzten Substituenten in Gew.% oder in g angegeben.

### Beispiel 1: Antimikrobielle Ausrüstung von Polypropylen

91,00 % Polypropylen-Homopolymer MFI 0,23

0,05 % Sulfadiazin-Silbersalz

8,95 % Polypropylen-Maleinsäureanhydrid gepfropft (MSA-Gehalt 2 Gew.%), ca. 15 % stöchiometrischer Überschuss

### Beispiel 2: Antimikrobielle Ausrüstung von Polyethylen

99 % HD-Polyethylen

0,1 % Sulfathiazol-Silbersalz

0,9 % Polyethylen-Methacrylsäureglyzidylester-Copolymer mit 8 Gew.% Glyzidylesteranteil, ca. 50 % stöchiometrischer Überschuss.

### Beispiel 3: Antimikrobielle Ausrüstung von Epoxidgussharzen

85 % Poly(Bis-phenol A-Glyzidylether) Molekulargewicht > 1200 14,7 % Tetraethylenpentamin als Härter

0,2 % Diazabicyclooktan als Beschleuniger

0,1 % 5-Methoxysulfadiazin-Silbersalz

### Beispiel 4: Antimikrobielle Ausrüstung von Polyurethan-Weichschaum

100 g Polypropylenglykol auf Glyzerinbasis mit OH-Zahl 2800

2 g Silikonzellstabilisator

1,5 g Dimethylcyclohexylamin als Katalysator

3,4 g Wasser als Schäumungsmittel

0,15 g Sulfamethylthiazol-Silbersalz

66 g Diphenylmethandiisocyanat, ca. 6 % stöchiometrischer Überschuss.

Der erhaltene Weichschaum wies ein Raumgewicht von 38,5 kg/m³ auf.

### Beispiel 5: Antimikrobielle Ausrüstung von Polyethylenterephtalat

100 g Polyethylenterephtalat

0,08 g Sulfadiazin-Silbersalz

0,1 g Carbonyl-bis-caprolactam, ca. 22 % stöchiometrischer Überschuss.

### Beispiel 6: Antimikrobielle Ausrüstung von Polyamid 6

100 g Polyamid 6

0,12 g Sulfaisoxazol-Silbersalz

0,10 g 1,3-Phenylen-bis-(2-oxazolin-2), ca. 30 % stöchiometrischer Überschuss.

Die Beispiele 5 und 6 sind insbesondere für die antimikrobielle Ausrüstung von Überzügen und Stoffen von besonderer Bedeutung, weil die herkömmliche Ausrüstung beispielsweise mit einem Silberzeolith eine vergleichsweise geringe Wirkung zeigt und durch die Einlagerung von körnigen Stoffen die elastischen Eigenschaften dieser Überzüge und Stoffe beeinträchtigt.

Die Polymere der Beispiele 1 bis 6 wurden einer Wirksamkeitsprüfung der Ausrüstung gegen Testkeime Escherichia coli DSM 787 und Staphylococcus aureus DSM 346 unterworfen. Die Prüfung hinsichtlich der antimikrobiellen Aktivität erfolgte gemäß JIS Z 2801: 2000. Als unwirksame Referenzprobe (Nullprobe) diente eine wirkstofffreie Kunststoffprobe.

In einem ersten Schritt wurden die Probekörper mit 5 ml Bakteriensuspension getränkt, die die ausgewählten Testkeime in einem geeigneten Nährmedium in bekannter Menge enthielt. Die beimpften Stoffproben wurden in verschlossenen Zentriefugenröhrchen (Luftfeuchtigkeit > 90 %) bei einer Temperatur von 23 °C für 24 Stunden gelagert. Nach der Inkubation wurde die Bakteriensuspension unter sterilen Bedingungen wieder aus den Proben extrahiert. Aus den gewonnen Extrakten wurde die Anzahl der lebenden Keime (Bakterien) ermittelt und der ursprünglichen Keimzahl vor der Inkubation gegenübergestellt.

Für die Bestimmung der Anzahl der lebenden Keime in den Extrakten wurden die Extrakte in verschiedenen Stufen verdünnt, auf geeignete Nährböden aufgebracht und bei 35 °C für zwei Tage inkubiert. Nach der Inkubation erfolgte die Auszählung der auf den Nährböden gewachsenen Bakterienkollonien und darauf basierend die Berechnung der in den Extrakten vorhandenen lebenden Keime.

Die Gegenüberstellung der in den Extrakten aus den antimikrobiell ausgerüsteten Polymeren ermittelten Keimzahlen und der im Extrakt der Nullprobe gefundenen Keimzahl zeigt die Wirksamkeit der Ausrüstung. Ist die in den Probenextrakten ermittelte Keimzahl deutlich geringer als im Extrakt der Nullprobe, so kommt es infolge der antimikrobiellen Ausrüstung zum Absterben von Keimen während der Inkubation der beimpften Polymerprobe.

Zur Überprüfung der Eluierbarkeit der in den Proben eingearbeiteten Ausrüstungen wurden die Proben einem Auswaschprozess unterworfen, und zwar wurden die Proben im Verhältnis 1 : 10 mit Reinstwasser überschichtet, für eine Minute stehen gelassen und danach ausgepresst. Dieser Vorgang wurde dreimal wiederholt, bevor die Proben im Trockenschrank bei 40 °C getrocknet wurden. Die ausgewaschenen, trockenen Proben wurden ebenfalls dem beschriebenen Test auf antimikrobielle Wirksamkeit unterzogen.

Die Versuchsergebnisse sind in der nachstehenden Tabelle zusammengefasst, wobei der in bekannter Weise aus den Versuchsergebnissen errechnete Wert R der antimikrobiellen Aktivität angegeben wird. Bei einem Reduktionsfaktor R > 2 liegt eine deutliche antimikrobielle Wirkung vor.

| | Ausgangskeimzahl KBE | | Keimzahl nach 24 h | | Reduktionsfaktor R | |
|---|---|---|---|---|---|---|
| | S. aureus | E. coli | S. aureus | E. coli | S. aureus | E. coli |
| Nullprobe | 1,8 x 10⁵ | 2,0 x 10⁵ | 2,0 x 10⁵ | 1,8 x 10⁵ | | |
| Beispiel 1 | 1,8 x 10⁵ | 2,0 x 10⁵ | 1,0 x 10¹ | 1,0 x 10¹ | >4,3 | >4,3 |
| Beispiel 2 | 1,8 x 10⁵ | 2,0 x 10⁵ | 2,0 x 10¹ | 1,0 x 10¹ | 4,0 | 4,3 |
| Beispiel 3 | 1,8 x 10⁵ | 2,0 x 10⁵ | 1,0 x 10¹ | 1,0 x 10¹ | >4,3 | >4,3 |
| Beispiel 4 | 1,8 x 10⁵ | 2,0 x 10⁵ | 1,2 x 10¹ | 1,0 x 10¹ | >4,3 | >4,3 |
| Beispiel 5 | 1,8 x 10⁵ | 2,0 x 10⁵ | 1,4 x 10¹ | 1,1 x 10¹ | >4,2 | >4,2 |
| Beispiel 6 | 1,8 x 10⁵ | 2,0 x 10⁵ | 1,0 x 10¹ | 1,0 x 10¹ | >4,3 | >4,3 |

| Nach dem Auswaschen | | | | | | |
|---|---|---|---|---|---|---|
| | Ausgangskeimzahl KBE | | Keimzahl nach 24 h | | Reduktionsfaktor R | |
| Nullprobe | 1,8 x 10⁵ | 2,0 x 10⁵ | 2,0 x 10⁵ | 1,5 x 10⁵ | | |
| Beispiel 1 | 1,8 x 10⁵ | 2,0 x 10⁵ | 4,5 x 10¹ | 1,0 x 10¹ | >4,3 | >4,2 |
| Beispiel 2 | 1,8 x 10⁵ | 2,0 x 10⁵ | 7,0 x 10¹ | 1,0 x 10¹ | >4,3 | >4,2 |
| Beispiel 3 | 1,8 x 10⁵ | 2,0 x 10⁵ | 1,5 x 10¹ | 1,0 x 10¹ | >4,3 | >4,2 |
| Beispiel 4 | 1,8 x 10⁵ | 2,0 x 10⁵ | 1,5 x 10¹ | 1,0 x 10¹ | >4,3 | >4,2 |
| Beispiel 5 | 1,8 x 10⁵ | 2,0 x 10⁵ | 1,3 x 10¹ | 1,1 x 10¹ | >4,3 | >4,2 |
| Beispiel 6 | 1,8 x 10⁵ | 2,0 x 10⁵ | 1,4 x 10¹ | 1,0 x 10¹ | >4,3 | >4,2 |

## Patentansprüche

1. Antimikrobielle Ausrüstung von Kunststoffen und textilen Oberflächen auf der Basis von Sulfonamid-Silbersalzen mit einer Aminogruppe in der 4'-Stellung, **dadurch gekennzeichnet, dass** die Aminogruppe mit Hilfe eines mit der Aminogruppe durch Addition reagierenden, eine Salzbildung durch eine Carboxygruppe ausschließenden Substituenten in eine Polymerstruktur kovalent eingebunden ist.

2. Antimikrobielle Ausrüstung nach Anspruch 1, **dadurch gekennzeichnet, dass** die Aminogruppe durch ein polymeres Oxiran als Substituent in Form eines Alkanolamins in die Polymerstruktur eingebunden ist.

3. Antimikrobielle Ausrüstung nach Anspruch 1, **dadurch gekennzeichnet, dass** die Aminogruppe durch ein polymeres Isocyanat als Substituent in Form eines Ureids in die Polymerstruktur eingebunden ist.

4. Antimikrobielle Ausrüstung nach Anspruch 1, **dadurch gekennzeichnet, dass** die Aminogruppe durch ein Bis-Acylcaprolactam als Substituent in Form eines Amids in die Polymerstruktur eingebunden ist.
